# EUROPEAN PATENT APPLICATION

(11) **EP 3 382 176 A1**
(43) Date of publication of application: **03.10.2018**
(21) Application number: 16868431.4
(22) Date of filing: 15.11.2016
(51) Int. Cl.: F01P 7/16, F16K 31/126

(54) **INTERNAL-COMBUSTION ENGINE COOLING SYSTEM**

(30) Priority: 24.11.2015 JP 2015228531
(71) Applicant: Aisin Seiki Kabushiki Kaisha, Kariya-shi, Aichi 448-8650 (JP)
(72) Inventor: KOGA Yojiro, Kariya-shi, Aichi 4488650 (JP); SATO Tadayoshi, Kariya-shi, Aichi 4488650 (JP)
(74) Representative: Kramer Barske Schmidtchen Patentanwälte PartG mbB
(86) International application number: PCT/JP2016/083790
(87) International publication number: WO 2017/090483

(57) **Abstract**

A cooling system for an internal combustion engine includes a coolant flow passage through which coolant flows between the internal combustion engine and a heat exchanger, a flow amount control valve incorporated in the coolant flow passage and configured to control flow of the coolant flowing in the coolant flow passage, and a control section configured to effect switchover from a full opened state to a full closed state of the flow amount control valve based on a supply of a negative pressure produced in the internal combustion engine and to effect also switchover from the full closed state to the full opened state over a second period longer than a first period required for the switchover for the flow amount control valve from the full closed state to the full opened state, in response to stop of the supply of the negative pressure.

## Description

### TECHNICA FIELD

This invention relates to a cooling system for an internal combustion engine for controlling flow of coolant between the internal combustion engine and a heat exchanger.

### BACKGROUND ART

Conventionally, an internal combustion engine, for realizing improvement of driving or fuel consumption efficiency under an optimal condition, promotes a warm-up operation at a cold time and implements a cooling operation at a hot time. Specifically, when the temperature of coolant is low, control is effected not to flow the coolant to e.g. a radiator, thus promoting warm-up of the internal combustion engine; and when the temperature of coolant is high, the coolant is allowed to flow to e.g. the radiator, thus controlling the temperature of the coolant to an optimal temperature for fuel combustion. A technique usable in this type of technique is disclosed in e.g. Patent Document 1.

A cooling water control valve disclosed in Patent Document 1 includes, in its casing, a valve body for controlling a flow amount of cooling water (corresponding to "coolant" described above) and an actuator for driving this valve body. The actuator is configured to be capable of adjusting an opening degree of an opening portion of the valve body, for effecting a flow amount control of the cooling water.

### BACKGROUND ART DOCUMENT

### PATENT DOCUMENT

Patent Document 1: Japanese Unexamined Patent Application Publication No. 2013-249810

### SUMMARY OF THE INVENTION

### PROBLEM TO BE SOLVED BY INVENTION

The technique disclosed in Patent Document 1 controls an opening portion of a valve body by a motor actuator, so flow amount adjustment of cooling water can vary from a very small amount to a large flow amount. However, since the technique requires provision of the motor actuator, it can result in cost increase. Further, for fine adjustment of the flow amount, a sensor or the like needs to be provided for detecting the opening degree of the valve body. This can result in further increase of the cost.

Then, there is a need for a cooling system for an internal combustion engine that can control flow of coolant at a low cost.

### SOLUTION

According to a characterizing feature of a cooling system for an internal combustion engine relating to the present invention, the cooling system comprises:
a coolant flow passage through which coolant flows between the internal combustion engine and a heat exchanger;
a flow amount control valve incorporated in the coolant flow passage and configured to control flow of the coolant flowing in the coolant flow passage; and
a control section configured to effect switchover from a full opened state to a full closed state of the flow amount control valve based on a supply of a negative pressure produced in the internal combustion engine and to effect also switchover from the full closed state to the full opened state over a second period longer than a first period required for the switchover for the flow amount control valve from the full closed state to the full opened state, in response to stop of the supply of the negative pressure.

With the above-described characterizing feature, the flow amount control valve can be controlled by a negative pressure produced in the internal combustion engine. Thus, there is no need to additionally provide a motor actuator or an angle senor, etc. Thus, the flow (communication) of coolant can be controlled inexpensively. Further, with the above arrangement, it is possible to delay the response in the switchover of the flow amount control valve from the full closed state to the full opened state, as compared with a conventional flow amount control valve. Therefore, it is possible to prevent non-warmed coolant from flowing at one time altogether through the flow amount control valve, so that re-cooling of once warmed-up internal combustion engine or coolant can be suppressed.

Preferably, the system further comprises:
a switching valve for switching a pressure to be fed to the control section to either one of a first pressure comprised of the negative pressure produced in the internal combustion engine or a second pressure higher than the first pressure; and a constricted portion for constricting an opening area of a feed passage for feeding a fluid having the second pressure to the switching valve is incorporated in the feed passage.

With the above-described arrangement, it is readily possible for the constricted portion to realize a configuration for setting an opening area of a feed passage for feeding fluid having the second pressure smaller than an opening area of the feed passage for feeding fluid having the first pressure. Therefore, the above-described response relating to the switchover from the full closed state to the full opened state can be realized at low cost.

Still preferably, the control section is configured such that when the flow amount control valve is switched from the full closed state to the full opened state, the control section firstly provides alternation between the full closed state and a released state of the full closed state and then provides switchover to the full opened state.

With the above-described arrangement, the arrangement of delaying the response for the switchover from the full closed state to the full opened state can be provided through control scheme.

Further preferably:
the flow amount control valve includes:
   a communication passage for communicating an inlet port through which the coolant enters the flow amount control valve to an outlet port through which the coolant flows out of the flow amount control valve; and
   a bypass passage that communicates the inlet port to the outlet port, with bypassing the communication passage; and
the control section firstly establishes communication between the inlet port and the outlet port via the bypass passage and then establishes communication between the inlet port and the outlet port via the communication passage.

With the above-described arrangement, prior to communication (flow) of coolant via the communication passage, communication of coolant can be established via the bypass passage. Therefore, by setting the flow amount of coolant that flows via the bypass passage smaller than the flow amount of coolant that flows via the communication passage, the above-described arrangement of delaying response can be realized. Incidentally, such bypass passage can be realized by setting the flow amount area of the bypass passage smaller than that of the communication passage or by intermittent adjustment of the valve opening period of the bypass passage.

### BRIEF DESCRIPTION OF THE DRAWINGS

[Fig. 1] is a diagram showing a configuration of a cooling system for an internal combustion engine,
[Fig. 2] is a view showing one example of a flow amount control of coolant,
[Fig. 3] is a diagram showing a configuration of a cooling system for an internal combustion engine according to a further embodiment,
[Fig. 4] is a view showing a flow amount control of coolant according to the further embodiment,
[Fig. 5] is a view showing a flow amount control of coolant according to a still further embodiment.

### EMBODIMENTS

A cooling system for an internal combustion engine relating to the present invention controls flow (communication) of coolant by utilizing a negative pressure produced in the internal combustion engine. Next, a cooling system 1 for an internal combustion engine of this embodiment (to be referred to simply as a "cooling system" hereinafter) will be explained.

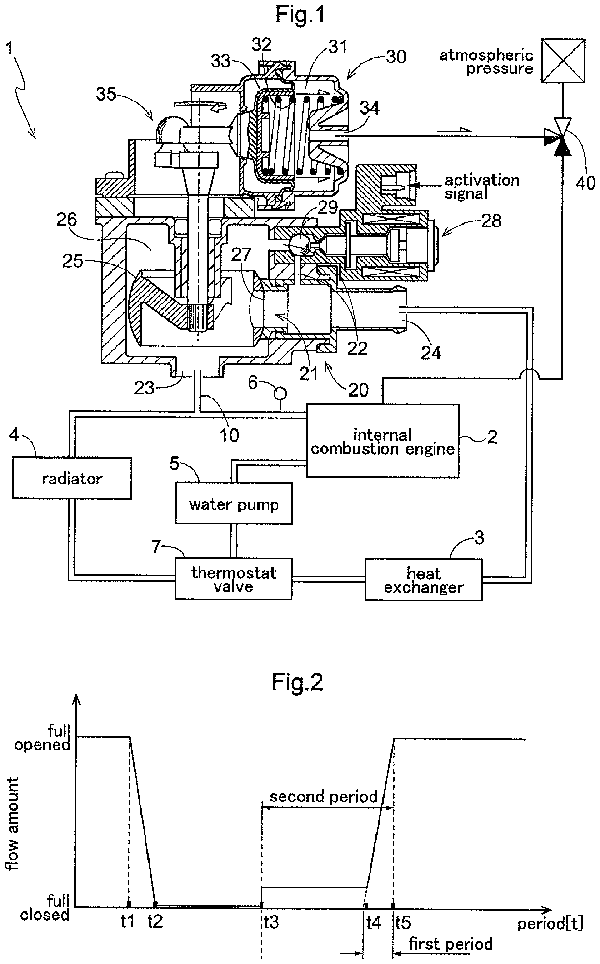

Fig.1 is a block diagram schematically showing a configuration of the cooling system 1 relating to this embodiment. As shown in Fig. 1, the cooling system 1 includes a coolant flow passage 10, a flow amount control valve 20, a control section 30 and a switching valve 40.

The coolant flow passage 10 communicates coolant between an internal combustion engine 2 and a heat exchanger 3. Here, the "internal combustion engine 2" refers to an engine mounted on a vehicle and configured to output power by combusting fuel such as gasoline, etc. The "heat exchanger 3" refers to a heater core for effecting heat exchange with coolant. For instance, in case warm-up of the heat exchanger 3 is needed at e.g. the time of start of the internal combustion engine 2, communication of the coolant to the heat exchanger 3 is stopped for promoting the warm-up of this heat exchanger 3. With this, when warm-up of inside of a vehicle cabin is to be effected for instance, it is possible to reduce a time period required until warm or hot air can be supplied into the vehicle cabin. On the other hand, when such warm-up of the heat exchanger 3 is not needed, coolant can be communicated to the heat exchanger 3 for cooling this heat exchanger 3.

Further, when cooling of the internal combustion engine 2 becomes necessary, the coolant is communicated to a radiator 4 for cooling the internal combustion engine 2. Such communications of coolant to the heat exchanger 3 or to the radiator 4 are effected by a water pump 5. And, according to a temperature of the coolant detected by a water temperature sensor 6, a thermostat valve 7 is controlled to set whether the coolant is to be communicated to the heat exchanger 3 or to the radiator 4.

The flow amount control valve 20 is incorporated in the coolant flow passage 10 and controls flow (communication) of the coolant to flow in this coolant flow passage 10. As described above, the coolant flow passage 10 communicates the coolant between the internal combustion engine 2 and the heat exchanger 3. The flow amount control valve 20 is incorporated in series within such coolant flow passage 10. Therefore, this flow amount control valve 20 is arranged such that the internal combustion engine 2, the flow amount control valve 20 and the heat exchanger 3 are disposed in this mentioned order.

In this embodiment, the flow amount control valve 20 is configured to include a communication passage 21 and a bypass passage 22. The communication passage 21 establishes communication between an inlet port 23 and an outlet port 24. The inlet port 23 is a port trough which the coolant enters (introduced) the flow amount control valve 20. The outlet port 24 is a port through which the coolant flows out of (discharged from) the flow amount control valve 20. Such communication passage 21 corresponds to a main flow passage of the coolant that communicates through the flow amount control valve 20.

On the other hand, the bypass passage 22 establishes communication between the inlet port 23 and the outlet port 24 with bypassing the communication passage 21. There, the language "bypassing the communication passage 21" means that the coolant does not flow through the communication passage 21. Therefore, the bypass passage 22 is disposed in juxtaposition with the communication passage 21, between the inlet port 23 and the outlet port 24. Such bypass passage 22 corresponds to an auxiliary flow passage of the coolant that flows in the flow amount control valve 20. The bypass passage 22 is configured such that an opening area of this bypass passage 22 is smaller than an opening area of the communication passage 21. For instance, advantageously, the opening area of the bypass passage 22 can be set to a fraction or one-few hundreds-th of the opening area of the communication passage 21. The bypass passage 22 is constituted of an electromagnetic valve 28 whose opened/closed state is controlled by changing a position of a ball valve 29 in response to an activation signal. Incidentally, advantageously, the flow amount control valve 20 can be a normally opened type in view of fail-safe aspect, in order to prevent blocking of coolant communication in the event of a failure.

The control section 30 effects control of the opened/closed state of the flow amount control valve 20. Here, "control of the opened/closed state of the flow amount control valve 20" means switchover from the full opened state to the full closed state of the flow amount control valve 20 as well as switchover from the full closed state to the full opened state of the flow amount control valve 20. The control section 30 effects such control based on a feeding state of a negative pressure produced in the internal combustion engine 2. Here, "a negative pressure produced in the internal combustion engine 2" means a pressure lower than the atmospheric pressure which will develop inside the cylinder when the piston is lowered during an intake stroke of the internal combustion engine 2. Then, the control section 30 switches over the flow amount control valve 20 from the full closed state to the full opened state based on (in response to) feeding of such negative pressure, or the control section 30 switches over the flow amount control valve 20 from the full opened state to the full closed state based on (in response to) stop of feeding of such negative pressure.

The control section 30 is configured to allow feeding of such negative pressure of the internal combustion engine 2 via the switching valve 40. This switching valve 40 is configured as a three-way valve, which switches the pressure to be fed to the control section 30 to either a first pressure which comprises the above-described negative pressure produced in the internal combustion engine 2 or to a second pressure higher than the first pressure. Here, the first pressure is a pressure that is lower than the atmospheric pressure and that is produced in the internal combustion engine 2 as described above. The second pressure is a pressure higher than the pressure produced in the internal combustion engine 2. As such "second pressure", the atmospheric pressure is employed in this embodiment. The first pressure and the second pressure are fed to a control chamber 31 of the control section 30.

The control chamber 31 incorporates therein a spring member 32 and a valve body 33. When the first pressure is fed to the control chamber 31, the valve body 33 is moved toward a pressure feed opening 34 side of the control chamber 31 against an urging force of the spring member 32. In response to this, a link mechanism 35 is rotated about a rotational axis to rotate a spherical-faced valve 25 of the flow amount control valve 20 inside the valve chamber 26. With this, an opening portion 27 of the communication passage 21 is closed by the spherical-faced valve 25, thus setting the flow amount control valve 20 into the full closed state.

On the other hand, when the second pressure is fed to the control chamber 31, the valve body 33, as being urged by the spring member 32, is moved to the far side of the control valve 31. With this, the link mechanism 35 is rotated about the rotational axis to rotate the spherical-faced valve 25 of the flow amount control valve 20 inside the valve chamber 26. With this, the spherical-faced valve 25 is moved away from the opening portion 27 of the communication passage 21, whereby the flow amount control valve 20 is set to the full opened state.

Here, the flow amount control valve 20 can be switched over from the full closed state to the full opened state only by stopping feeding of the first pressure. If a period required for switching the flow amount control valve 20 from the full closed state to the full opened state by such stopping of feeding of the first pressure is defined as "first period". In this embodiment, the control section 30 is configured to require a "second period" longer than the first period for switching the flow amount control valve 20 from the full closed state to the full opened state. Namely, the control section 30 firstly establishes communication of coolant between the inlet port 23 and the outlet port 24 via the bypass passage 22 which is the auxiliary passage before establishing communication of the coolant to the communication passage 21 which is the main passage and then establishes communication between the inlet port 23 and the outlet port 24 via the communication passage 21.

Therefore, the establishment of communication between the inlet port 23 and the outlet port 24 via the bypass passage 22 takes longer than the period (first period) required for direct establishment of communication between the inlet port 23 and the outlet port 24 via the communication passage 21, by a period required for the establishment of communication between the inlet port 23 and the outlet port 24 via the bypass passage 22. With this arrangement, it is possible to suppress occurrence of inconvenience of cooling of the internal combustion engine 2 with introduction of coolant having a lower temperature than the temperature of this internal combustion engine after warm-up, in spite of this internal combustion engine 2 being actually warmed up. Incidentally, it is possible to arrange such that coolant may be communicated also to the bypass passage 22 or not communicated to this bypass passage 22, when coolant is flowing in the communication passage 21.

Next, a mode of the flow amount control of coolant by the cooling system 1 will be explained. Fig.2 shows an example of the flow amount control mode. In this Fig. 2, the vertical represents a flow amount of coolant that flows out of the flow amount control valve 20 and the horizontal axis represents a time period. As described above, the flow amount control valve 20 is a normally opened type. Therefore, this valve 20 is maintained under its full opened state until the internal combustion engine 2 is started at t=t1.

When the internal combustion engine 2 is started at t=t1, the first pressure as a negative pressure produced in the internal combustion engine 2 is fed to the control section 30. In response to this, the flow amount control valve 20 is switched over from the full opened state to the full closed state (t=t2). At this time, the thermostat valve 7 too is under its closed state, so no communication of coolant takes place. Thus, warm-up of the internal combustion engine 2 is promoted.

Upon completion of the warm-up of the internal combustion engine 2 (t=t3), an activation signal is inputted to the electromagnetic valve 28, thus allowing communication of coolant to the bypass passage 22. With this, coolant is communicated to the bypass passage 22. As the coolant is communicated also to the internal combustion engine 2 under this state, heat will be equalized over the entire internal combustion engine 2 (t=t3-t4). Thereafter, in order to effect heat exchange between the coolant and the heat exchanger 3, the feeding of the first pressure to the control chamber 31 of the control section 30 is stopped, whereby the second pressure (e.g. the atmospheric pressure) higher than the first pressure is fed. In response to this, the flow amount control valve 20 is shifted to the full opened state (t=t5). Further, coolant is communicated also to the radiator 4 depending on the temperature of this coolant, whereby the internal combustion engine 2 is cooled.

In this way, according to this cooling system 1, when the flow amount control valve 20 is to be switched over from the full closed state to the full opened state, during t3-t4, firstly, coolant is communicated via the bypass passage 22 as the auxiliary passage by an amount sufficiently smaller than the flow amount of coolant by the communication passage 21 as a main flow passage; thereafter, the coolant is communicated via the communication passage 21. Therefore, in comparison with a period (first period) required for switchover of the flow amount control valve 20 from the full closed state to the full opened state, which is the arrangement of communicating the coolant via the communication passage 21 alone, the flow amount control valve 20 is switched over from the full closed state to the full opened state, taking a longer period (second period).

### [Other Embodiments]

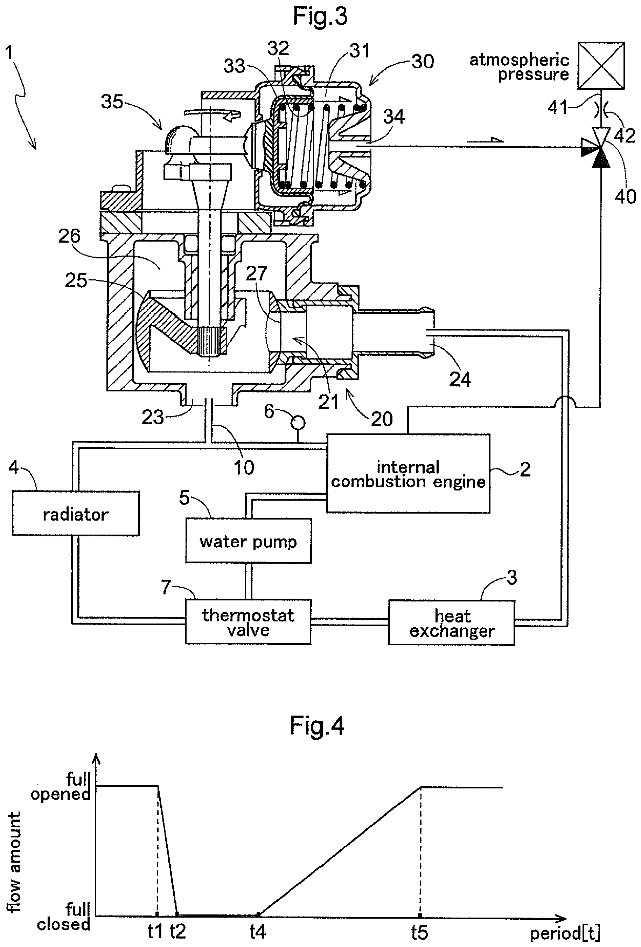

In the foregoing embodiment, it was explained that the flow amount control valve 20 includes the communication passage 21 and the bypass passage 22. Alternatively, the flow amount control valve 20 may not include the bypass passage 22. Fig. 3 is a block diagram schematically showing such modified configuration of the cooling system 1.

In this embodiment, since the bypass passage 22 is not provided in the flow amount control valve 20, the electromagnetic valve 28 for controlling communication state of this bypass passage 22 is not provided, either. On the other hand, a constricted portion 42 is provided in a feed passage 41 through which the second pressure (e.g. the atmospheric pressure) is fed to the switching valve 40. This constricted portion 42 constricts the opening area of the feed passage 41. Such constricted portion 42 can be constituted of a known orifice for example, or can be constituted of a valve for adjusting the opening area. With this, the period until the control chamber 31 is filled with fluid having the atmospheric pressure is set longer than the period until the control chamber 31 is filled with the atmospheric pressure fluid in case no such constricted portion 42 is provided in the feed passage 41. Namely, as indicated by t4-t5 in Fig. 4, the period until the flow amount control valve 20 is switched over from the full closed state to the full opened state can be extended. Thus, like the foregoing embodiment, the switchover of the flow amount control valve 20 from the full closed state to the full opened state can proceed gradually, so that the heat in the internal combustion engine 2 can be rendered uniform.

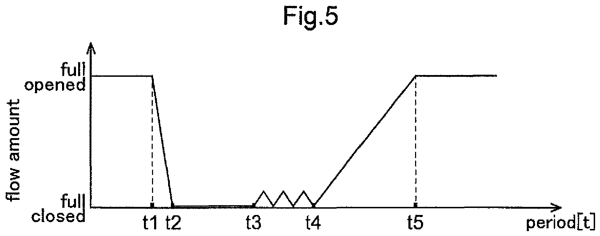

Further, the control section 30 can be alternatively configured such that when the flow amount control valve 20 is switched from the full closed state to the full opened state, the control section 30 firstly alternates between the full closed state and a released state of the full closed state and thereafter switches to the full opened state. With this configuration, as shown in Fig. 5, during t3-t4, the full closed state and the released state that allows slight communication of coolant are alternated (effected for a plurality of times) so as to temporarily allow a flow amount sufficiently smaller than the flow amount of coolant under the full opened state, and thereafter the full opened state is provided, whereby the temperature variation of the internal combustion engine 2 can be made small like the foregoing embodiment.

### INDUSTRIAL APPLICABILITY

The present invention can be applied to a cooling system for an internal combustion engine for controlling flow of coolant between the internal combustion engine and a heat exchanger.

### DESCRIPTION OF REFERENCE MARKS/NUMERALS

- 1:: cooling system (cooling system of internal combustion engine)
- 2:: internal combustion engine
- 3:: heat exchanger
- 10:: coolant flow passage
- 20:: flow amount control valve
- 21:: communication passage
- 22:: bypass passage
- 23:: inlet port
- 24:: outlet port
- 30:: control section
- 40:: switching valve
- 41:: feed passage
- 42:: constricted portion

## Claims

1. A cooling system for an internal combustion engine, the cooling system comprising:
a coolant flow passage through which coolant flows between the internal combustion engine and a heat exchanger;
a flow amount control valve incorporated in the coolant flow passage and configured to control flow of the coolant flowing in the coolant flow passage; and
a control section configured to effect switchover from a full opened state to a full closed state of the flow amount control valve based on a supply of a negative pressure produced in the internal combustion engine and to effect also switchover from the full closed state to the full opened state over a second period longer than a first period required for the switchover for the flow amount control valve from the full closed state to the full opened state, in response to stop of the supply of the negative pressure.

2. The cooling system for an internal combustion engine of claim 1, wherein:
the system further comprises a switching valve for switching a pressure to be fed to the control section to either one of a first pressure comprised of the negative pressure produced in the internal combustion engine or a second pressure higher than the first pressure; and
a constricted portion for constricting an opening area of a feed passage for feeding a fluid having the second pressure to the switching valve is incorporated in the feed passage.

3. The cooling system for an internal combustion engine of claim 1 or 2, wherein the control section is configured such that when the flow amount control valve is switched from the full closed state to the full opened state, the control section firstly provides alternation between the full closed state and a released state of the full closed state and then provides switchover to the full opened state.

4. The cooling system for an internal combustion engine of any one of claims 1-3, wherein:
the flow amount control valve includes:
a communication passage for communicating an inlet port through which the coolant enters the flow amount control valve to an outlet port through which the coolant flows out of the flow amount control valve; and
a bypass passage that communicates the inlet port to the outlet port, with bypassing the communication passage; and
the control section firstly establishes communication between the inlet port and the outlet port via the bypass passage and then establishes communication between the inlet port and the outlet port via the communication passage.
